# NEUE EUROPÄISCHE PATENTSCHRIFT

(11) **EP 2 040 354 B2**
(45) Veröffentlichungstag und Bekanntmachung des Hinweises auf die Entscheidung über den Einspruch: **23.01.2019**
(45) Hinweis auf die Patenterteilung: 08.09.2010
(21) Anmeldenummer: 07018590.5
(22) Anmeldetag: 21.09.2007
(51) Int. Cl.: H02K 5/128, F04D 13/06, B29C 70/30

(54) **Spaltrohr eines Antriebsmotors für ein Pumpenaggregat**
Rotor can of a drive motor for a pump assembly
Gaine d'un moteur de commande pour un agrégat de pompe

(43) Veröffentlichungstag der Anmeldung: 25.03.2009
(73) Patentinhaber: Grundfos Management A/S, 8850 Bjerringbro (DK)
(72) Erfinder: Hansen, Jørn Toftegaard, 8600 Silkeborg (DK); Larsen, Tom Eklundh, 8860 Ulstrup (DK); Høj, Finn Mathiesen, 8200 Aarhuis N (DK)
(74) Vertreter: Hemmer, Arnd

(56) Entgegenhaltungen:
- EP-A- 0 349 674
- EP-A- 1 059 722
- WO-A-01/84690
- DE-A1- 3 510 626

## Beschreibung

Die Erfindung betrifft ein Spaltrohr eines Antriebsmotors für ein Pumpenaggregat sowie ein Verfahren zur Herstellung eines solchen Spaltrohres. Ein solches Pumpenaggregat kann beispielsweise ein Heizungsumwälzpumpenaggregat sein.

Die Antriebsmotoren derartiger Pumpenaggregate sind als Nassläufer ausgebildet, wobei ein Spaltrohr zwischen Stator- und Rotorraum angeordnet ist, welches den fluidgefüllten Rotorraum von dem trockenen Stätorraum trennt Bislang wurden derartige Spaltrohre meist aus Metall gefertigt. Dies hat jedoch den Nachteil, dass sie das Magnetfeld zwischen Stator und Rotor beeinträchtigen. Aus diesem Grund ist es bevorzugt, elektrisch nichtleitende Spaltrohre einzusetzen, beispielsweise Spaltrohre aus Kunststoff. Bei den Spaltrohren aus Kunststoff besteht jedoch das Problem, die gewünschte Druckfestigkeit bei höheren Pumpendrücken zu gewährleisten. Dazu muss das Spaltrohr eine gewisse Mindestdicke aufweisen Mit zunehmender Dicke des Spaltrohres in radialer Richtung vergrößert sich jedoch der Abstand zwischen Rotor und Stator, wodurch der Wirkungsgrad des Antriebsmotors verschlechtert wird.

EP 1 059 722 A1 offenbart einen Spalttopf aus faserverstärktem Kunststoff. Dabei kann der faserverstärkte Kunststoff Fasern aufweisen, welche in Umfangsrichtung orientiert sind.

EP 0 349 674 A2 offenbart ein Verfahren zum Herstellen eines Spalttopfes aus Faserverbundwerkstoff. Gemäß diesem Verfahren ist es vorgesehen. Fasern zur Verstärkung in Umfangsrichtung um den Spalttopf zu wickeln.

Es ist Aufgabe der Erfindung, ein Spaltrohr eines Antriebsmotors derart zu verbessern, dass es zum einen so ausgebildet werden kann, dass es das Magnetfeld zwischen Rotor und Stator möglichst wenig beeinflusst, und zum anderen bei großer Festigkeit möglichst dünn ausgebildet werden kann, um den Abstand zwischen Rotor und Stator verringern zu können.

Diese Aufgabe wird durch ein Spaltrohr mit den im Anspruch 1 angegebenen Merkmalen sowie durch ein Verfahren zum Herstellen eines Spaltrohres mit den im Anspruch 9 angegebenen Merkmalen gelöst Bevorzugte Ausführungsformen ergeben sich aus den zugehörigen Unteransprüchen, der nachfolgenden Beschreibung sowie den beigefügten Figuren.

Das Spaltrohr ist zumindest teilweise aus Kunststoff gefertigt Bevorzugt bildet dabei der Kunststoff das tragende, d. h. die mechanische Festigkeit des Spaltrohres gewährleistende Material. In dem Kunststoff sind Verstärkungselemente in Form von Fasern vorgesehen sein, welche ebenfalls aus Kunststoff oder aberaus anderen geeigneten Materialien gefertigt sein können. Somit kann als Kunststoff auch ein Kunststoff-Komposit-Material Verwendung finden. Darüber hinaus kann vorzugsweise eine metallische Schicht an der Innen- oder Außenseite des Spaltrohres aufgebracht sein, um das Spaltrohr hermetisch dicht auszubilden.

Der Kunststoff ist zumindest in einem Teil des Spaltrohres durch einzelne in dem Kunststoff verteilte Fasern verstärkt. Bei diesen einzelnen Fasern handelt es sich um Fasern, welche willkürlich in dem Kunststoff verteilt sind und nicht miteinander zu einem Gewebe verbunden sind. Diese Fasern können dem Kunststoff vor dessen Bearbeitung, d. h. vor dem Spritzgießen zugemischt werden, so dass ein Gemisch aus Kunststoff und Fasern im Spritzguss verarbeitet, d. h. in die Form des Spaltrohres gebracht wird. Wenn die Fasern auch willkürlich, vorzugsweise gleichmäßig im gesamten Kunststoff verteilt sind, so heißt dies jedoch nicht, dass sie auch willkürlich ausgerichtet sind. Erfindungsgemäß sind vlelmehr die Fasern in zumindest einer Schicht des Spaltrohres definiert in Umfangsrichtung bezogen auf die Längsachse des Stators ausgerichtet. In dieser Schicht erstrecken sich somit die einzelnen Fasern in Umfangsrichtung bzw. tangential zur Längsachse des Stators. Dies ist insbesondere in einem Bereich des Spaltrohres der Fall, welcher im Wesentlichen zylindrisch um die Längsachse des Spaltrohres ausgebildet ist. In diesem Bereich hat die umfängliche Ausrichtung der Fasern den Vorteil, dass das Spaltrohr durch die Fasern somit insbesondere in Umfangsrichtung verstärkt wird. in dieser Richtung können die Fasern einem im Inneren des Spaltrohres wirkenden Druck entgegenwirken, d. h. dem Material In dieser Richtung die erforderliche Zugfestigkeit geben, um einem solchen Druck standzuhalten. Es ist möglich, das über die gesamte Dicke des Spaltrohres in radialer Richtung die Fasern in der beschriebenen Weise definiert in Umfangsrichtung ausgerichtet sind. Es ist jedoch auch möglich, dass das Spaltrohr in radialer Richtung gesehen mehrschichtig ausgebildet ist und die Ausrichtung der Fasern in der beschriebenen Weise nur in einer oder einigen von mehreren Schichten gegeben ist. In den anderen Schichten können die Fasern dann entweder in anderer Richtung definiert ausgerichtet sein oder aber willkür lich ausgerichtet sein.

Durch die Ausrichtung der Fasern wird eine größere Festigkeit des Spaltrohres belgeringerer Wandstärke erreicht.

Die Fasern können beispielsweise Karbonfasern, Glasfasern, Metallfasern oder Aramidfasern, aber beispielsweise auch Naturfasern, wie z.B. Hanf, Baumwolle oder Seide sein.

Der Kunststoff des Spaltrohres weist drei aneinander angrenzende Schichten auf, wobei in einer Schicht die Faser in Umfangsrichtung ausgerichtet sind und in denzwei angrenzenden Schicht die Fasern in axialer Richtung bezogen auf die Längsachse des Spaltrohres ausgerichtet sind. Diese Schichten sind in radialer Richtung gesehen übereinanderliegend und aneinander angrenzend ausgebildet. In dem zylindrischen Abschnitt des Spaltrohres erstrecken sich diese Schichten somit ebenfalls in zylindrischer Form übereinanderliegend. Wenn das Spaltrohr topfförmig ausgebil-det ist, d. h. mit einem geschlossenen Boden an einem Axialende, so können sich dort erfindungsgemäß in zumindest einer Schicht die Fasern in umfänglicher Richtung erstrecken, drei. Durch die gekreuzte Ausrichtung der Fasern in drei aneinander angrenzenden Schichten, kann eine Verstärkung des Spaltrohres sowohl in axialer als auch in Umfangsrichtung bzw. im Boden sowohl in Umfangsrichtung als auch in radialer Richtung erreicht werden.

Erifindungs-gemäß weist der Kunststoff drei Schichten auf, wobei in einer mittleren Schicht die Fasern in Umfangsrichtung ausgerichtet sind und in den angrenzenden äußeren Schichten die Fasern in axialer Richtung in der vorangehend beschriebenen Weise ausgerichtet sind. Für den Fall, dass das Spaltrohr einen Boden hat, sind dort entsprechend in zwei äußeren Schichten die Fasern in radialer Richtung ausgerichtet und in der dazwischenliegenden Schicht die Fasern in Umfangsrichtung ausgerichtet. Dabei bilden die äußeren Schichten Randschichten und weisen eine geringere Schichtdicke auf als die mittlere Schicht Dadurch wird eine größere Verstärkung in Umfangsrichtung erreicht.

Gemäß einer weiteren bevorzugten Ausführungsform ist das Spaltrohr an zumindest einem Axialende offen ausgebildet und weist dort einen radial nach außen gerichteten Kragen auf, wobei in dem Kragen die Fasern in zumindest einer Schicht des Kunststoffes radial zur Längsachse des Spaltrohres ausgerichtet sind. Mit diesem Kragen kann das Spaltrohr später in einem Statorgehäuse befestigt werden bzw. mit dem Statorgehäuse in dichtenden Kontakt gebracht werden, um den Statorraum gegenüber dem Rotorraum abzudichten. Durch die radiale Ausrichtung der Fasern in diesem Kragen, wird der Kragen in radialer Richtung verstärkt, so dass insbesondere in dieser Richtung Kräfte übertragen bzw. aufgenommen werden können. Alternativ oder zusätzlich ist es möglich, in einem Teil oder einer Schicht des Kragens die Fasern tangential bzw. umfänglich auszurichten.

Gemäß einer weiteren besonderen Ausführungsform der Erfindung weist das Spaltrohr eine äußere Lage aus einem vorgespannten Material und eine innere Lage auf, welche aus dem Kunststoff ausgebildet ist, der durch einzelne in dem Kunststoff verteilte Fasern verstärkt ist, wobei die Fasern in der vorangehend beschriebenen Weise in zumindest einer Schicht der inneren Lage definiert in Umfangsrichtung bezogen auf die Längsachse des Stators ausgerichtet sind. Die äußere Lage aus dem vorgespannten Material sorgt für eine zusätzliche Festigkeit des Spaltrohres auch bei geringen Wandstärken. Durch die äußere Lage kann insbesondere im zylindrischen Abschnitt des Spaltrohres eine umfängliche Zugspannung, aber gegebenenfalls auch eine axiale Zugspannung erzeugt werden, welche Druckspannungen in der inneren Lage und zu einer radial nach innen gerichteten auf die innere Lage wirkenden Druckkraft führt. Durch diese Anordnung wird ein Ablösen der äußeren und der inneren Lage voneinander verhindert Darüber hinaus wirkt diese Druckkraft einem von innen auf das Spaltrohr wirkenden Fluiddruck entgegen. Auch können Risse in der inneren Lage durch die Vorspannung der äußeren Lage verhindert werden und so die Dichtigkeit des Spaltrohres verbessert werden.

Die Vorspannung des Materials kann dadurch erreicht werden, dass es sich um ein elastisch dehnbares Material handelt, welches vor oder beim Einspritzen des Kunststoffes der inneren Lage gedehnt wird. Da das Material nach der Dehnung aufgrund seiner Elastizität bestrebt ist, die Ausgangslage wieder einzunehmen, kommt es nach Verbindung mit der inneren Lage zu den gewünschten Spannungen im Material. Bei ausreichend großer Dehnung können diese Spannungen auch aufrechterhalten werden, wenn das Material der inneren Lage beim Erkalten schrumpft. Dazu wird die Dehnung des Materials der äußeren Lage vor oder beim Einspritzen des Kunststoffmaterials der Inneren Lage so gewählt, dass die Dehnung ein größeres Maß aufweist als die Schrumpfung des Kunststoffmaterials der inneren Lage bei dessen Erstarrung. Auf diese Weise wird eine Vorspannung des Materials der äußeren Lage auch nach dem Erstarren des Kunststoffes der inneren Lage aufrechterhalten.

Durch Kombination der Ausrichtung der Fasern im Kunststoff der inneren Lage in der beschriebene Weise mit der Anordnung einer vorgespannten äußeren Lage, kann ein besonders festes und gleichzeitig besonders dünnes Spaltrohr hergestellt werden.

Gemäß einer weiteren bevorzugten Ausführungsform ist in dem Kunststoff des Spaltrohres ein Lager, welches zur Lagerung eines Rotors vorgesehen ist, oder ein Lagerhalter, welcher zur Aufnahme eines Lagers zur Lagerung eines Rotors vorgesehen ist, eingegossen. Auf diese Weise kann die Montage eines Pumpenaggregates vereinfacht werden, da das Lager bzw. ein Lagerhalter zur Aufnahme des Lagers direkt bei der Fertigung des Spaltrohres in diesem definiert positioniert und fixiert werden kann.
Das Lager und der Lagerhalter sind vorzugsweise aus einem Material, welches eine größere Härte und/oder Steifigkeit als der Kunststoff des Spaltrohres aufweist, und insbesondere aus Metall gefertigt. So können Lager bzw. Lagerhalter die erforderliche Festigkeit ausweisen, um eine verschleißfreie Lagerung zu gewährleisten.

Weiter bevorzugt ist die zumindest eine Oberfläche des Lagers oder des Lagerhalters, welche mit dem Kunststoff des Spaltrohres in Kontakt ist, mit einer Oberflächen-Strukturierung, insbesondere einer Makro- oder Mikro-Strukturierung versehen. Diese Strukturierung ermöglicht einen besseren Kontakt bzw. Eingriff mit dem Kunststoff. Idealerweise kann so eine formschlüssige Verbindung zwischen Kunststoff und Lager bzw. Lagerhalter erreicht werden, indem der Kunststoff in die Strukturierung an der Oberfläche eingreift. Durch entsprechendes Aufrauen kann auch eine bessere Anhaftung des Kunststoffmaterials an der Oberfläche erreicht werden. Die Strukturierung kann entweder als Mikro-Strukturierung sehr klein ausgebildet sein oder auch als Makro-Strukturierung größer ausgebildet sein. Eine solche Makro-Strukturierung kann beispielsweise durch konische Ausgestaltung des Lagers oder in anderer Weise durch Ausbildung von Hinterschneidungen erreicht werden. So werden Teile des Lagers oder Lagerhalters so ausgebildet, dass sie von dem Kunststoff hintergriffen werden können.

In der Oberfläche können insbesondere Vorsprünge, Vertiefungen und/oder Löcher eingebracht sein. Die Strukturierung kann beispielsweise spanend eingebracht werden. Auch ist es möglich, die Oberfläche mittels Laser- oder Elektronenstrahl derart zu behandeln, das Vertiefungen und Erhebungen ausgebildet werden, welche zu einer Verklammerung mit dem umgebenden Kunststoff führen.

Gemäß einer bevorzugten Ausführungsform sind in dem Lager oder dem Lagerhalter Nuten oder Kanäle ausgebildet, welche sich parallel zur Längsachse des Spaltrohres über die axiale Länge des Lagers oder Lagerhalters erstrecken. Diese Nuten dienen dazu, dass das Lager bzw. der Lagerhalter von dem Fluid im Inneren des Spaltrohres umspu̅lt werden kann. Dadurch kann zum einen erreicht werden, dass alle Bauteile durch das umströmende Fluid auf demselben Temperaturniveau gehalten werden, um thermische Spannungen zu vermeiden. Zum anderen kann das Lager durch das umströmende Fluid gekühlt werden. Gegebenenfalls kann das Fluid auch zur Schmierung des Lagers verwendet werden.

Die Erfindung betrifft ferner ein Verfahren zum Herstellen eines Spaltrohres eines Antriebsmotors für ein Pumpenaggregat gemäß Anspruch 9, insbesondere zum Herstellen eines Spaltrohres gemäß der vorangehenden Beschreibung.

Gemäß dem erfindungsgemäßen Verfahren wird zumindest ein Teil des Spaltrohres aus Kunststoff im Spritzgussverfahren gefertigt, wobei dem Kunststoff vor dem Spritzgießen einzelne Fasern zur Verstärkung zugemischt werden. Die Fasern werden dabei vorzugsweise gleichmäßig in dem Kunststoffmaterial verteilt Anschließend wird der flüssige Kunststoff mit den darin verteilten Fasern in ein Spritzgusswerkzeug eingebracht bzw. eingespritzt. Das Spritzgusswerkzeug definiert die Form des zu fertigenden Spaltrohres. Während des Einbringens und/oder nach dem Einbringen des Kunststoffes wird ein inneres Formteil des Spritzgusswerkzeuges relativ zu einem äußeren Formteil des Spritzgusswerkzeuges rotiert. Dabei findet die Rotation um die Längsachse des zu formenden Spaltrohres statt. Es ist möglich die Rotation schon während des Einspritzens des Kunststoffes zu starten. Auch ist es möglich die Rotation erst nach dem Einspritzen des Kunststoffes, d. h. vorzugsweise direkt nach dem Einspritzen zu starten. Die Rotation zwischen äußeren und inneren Formteil findet dabei in einer Zeitspanne statt, in der der Kunststoff zumindest noch nicht vollständig erstarrt ist. Durch die Rotation von innerem und äußerem Formteil relativ zueinander kann eine definierte Ausrichtung der Fasern in dem Kunststoff erreicht werden. Dabei wird durch die Rotation eine Ausrichtung in der Rotationsrichtung, d. h. in Umfangsrichtung bzw. tangential bezogen auf die Längsachse des Spaltrohres erreicht. Durch diese Ausrichtung der Fasern wird eine erhöhte Zugfestigkeit des Kunststoffes in dieser Richtung bewirkt. Dadurch kann insgesamt ein festes und gleichzeitig dünnes Spaltrohr ausgebildet werden.

Hinsichtlich der Vorteile dieser Ausgestaltung wird auch auf die vorangehende Beschreibung verwiesen.

Je nach Ablauf und Steuerung des Einspritzvorganges und der Rotation zwischen äußerem und innerem Formteil ist es möglich, in dem Kunststoff über die gesamte radiale Dicke die Fasern in der genannten Weise definiert in Umfangsrichtung zu orientieren oder aber unterschiedliche Schichten zu generieren, in denen die Fasern in unterschiedlichen Richtungen gerichtet sind. Das heißt, es ist möglich, dass von mehreren Schichten, welche in radialer Richtung übereinanderliegen, nur in einer oder einzelnen Schichten die Fasern durch die Rotation in Umfangsrichtung ausgerichtet werden.

Der flüssige Kunststoff strömt in axialer Richtung parallel zur Längsachse des zu fertigenden Spaltrohres in den Teil des Spritzgusswerkzeuges ein, welcher die Umfangswandung des Spaltrohres formt bzw. definiert. Dies kann dadurch erreicht werden, dass der Kunststoff vom axialen Ende her eingespritzt wird. Es ist jedoch auch möglich, den Kunststoff in der Mitte des Spaltrohres einzuspritzen, so dass er in entgegengesetzten Richtungen in axialer Richtung strömt. Durch das axiale Einströmen des Kunststoffes kann zunächst eine entsprechend axiale Ausrichtung der dem Kunststoff beigemischten einzelnen Fasern erreicht werden.

Durch die beschriebene relative Rotation von innerem zu äußerem Formteil kann dann anschließend erreicht werden, dass ein Teil oder alle Fasern ihre Orientierung von der axialen Ausrichtung in umfängliche bzw. tangentialer Ausrichtung bezüglich der Spaltrohr-Längsachse ändern. Je nach Einstellung der Verfahrensparameter ist es möglich, dass in dem eingespritzten Kunststoff beim Erstarren mehrere Schichten ausgebildet werden, welche sich durch die Orientierung der Fasern unterscheiden. Insbesondere ist es möglich, zumindest eine Schicht auszubilden, welche an der Wandung eines Formteiles anliegt, in welcher die Fasern in axialer Richtung ausgerichtet bleiben, wenn der Kunststoff erstarrt. Dies erfolgt dadurch, dass im Randbereich des Spaltes zwischen innerem und äußerem Formteil, d. h. angrenzend an eine Wandung des Formteiles, der Kunststoff zuerst erstarrt. In den von den Wandungen des Formteils weiter beabstandeten Bereichen der Form bleibt der Kunststoff länger flüssig bzw. fließfähig, so dass es hier durch die Rotation der Formteile zueinander zu einer Ausrichtung der Fasern in Umfangsrichtung kommen kann. So wird vorzugsweise eine zweite, später erstarrende Schicht ausgebildet, in welcher die Fasern in Umfangsrichtung ausgerichtet sind. Durch die unterschiedliche Ausrichtung der Fasern in den verschiedenen Schichten, kann eine gezielte Verstärkung des Spaltrohres durch die Fasern in mehreren Richtungen erreicht werden. Gegenüber willkürlich ausgerichteten Fasern wird dabei eine gezielte Festigkeit des Spaltrohres erreicht, welche insbesondere eine dünne Ausgestaltung des Spaltrohres bei gleichbleibender oder höherer Stabilität des Spaltrohres gewährleistet.

Gemäß einer besonderen Ausführungsform ist ein dreischichtiger Aufbau des Kunststoffmaterials erzielbar, bei welchem in den beiden Randschichten, welche außen gelegen und den beiden Formteilen zugewandt sind, die axiale Ausrichtung der Fasern durch den Einspritzvorgang erzielt und bei der Erstarrung erhalten bleibt. Im dazwischenliegenden Mittelbereich erfolgt eine umfängliche Orientierung der Fasern durch Rotation der Formteile zueinander. Bevorzugt weist der Mittelbereich dabei in radialer Richtung eine größere Dicke als die Randbereiche auf, so dass die Verstärkung in Umfangsrichtung größer als in axialer Richtung ist. Bevorzugt hat der Mittelbereich eine Dicke von 40% oder mehr, vorzugsweise mehr als 60%, der gesamten Dicke des Kunststoffes in radialer Richtung.

Gemäß einer weiteren bevorzugten Ausführungsform wird, bevor der flüssige Kunststoff in das Spritzgusswerkzeug eingebracht wird, ein Lager oder Lagerhalter in definierter Position in das Spritzgusswerkzeug eingelegt. Beim nachfolgenden Einspritzen des Kunststoffes umfließt dieser dann das Lager oder den Lagerhalter, so dass das Lager oder der Lagerhalter fest in das Spaltrohr eingegossen wird.

Vorzugsweise wird das Lager oder der Lagerhalter in einer Ausnehmung in dem Spritzgusswerkzeug, insbesondere an dem inneren Formteil des Spritzgusswerkzeuges, eingelegt. Die Ausnehmung ist dabei so angeordnet und so ausgebildet, dass das Lager in definierter Position in der Form gehalten wird, so dass es sich hinterher in dem gegossenen Spaltrohr in definierter Position in dem Kunststoff eingeschlossen und gehalten ist.

Es ist bevorzugt, dass das Lager oder der Lagerhalter in einer Ausnehmung an dem inneren Formteil eingelegt wird und dort während des Einbringens des flüssigen Kunststoffes durch den Druck des Kunststoffes in Anlage an zumindest einer Oberfläche des Formteils gehalten wird. Auf diese Weise wird sichergestellt, dass das Lager sich nicht aus der definierten Position heraus verlagern kann. Darüber hinaus kann ein Kraftschluss zwischen Lager und Formteil erreicht werden, so dass beispielsweise bei Rotation des Formteiles das Lager oder der Lagerhalter, welches/welcher in kraftschlüssiger Anlage ist mit dem Formteil um die Längsachse des zu fertigenden Spaltrohres rotiert wird. Ein weiterer Vorteil der Anlage an der Oberfläche ist, dass eine dichtende Anlage erreicht werden kann, wodurch verhindert wird, dass der Kunststoff in den Bereich zwischen Lager bzw. Lagerhalter und der Oberfläche des Formteiles eintreten kann.

Zweckmäßigerweise wird vor dem Einlegen in das Spritzgusswerkzeug an zumindest einer Oberfläche des Lagers oder Lagerhalters, welche dazu vorgesehen ist, mit dem Kunststoff in Kontakt zukommen, eine Strukturierung insbesondere eine Mikro- und/oder Makro-Strukturierung ausgebildet. Diese Strukturierung kann in der oben anhand des Spaltrohres beschriebenen Weise erfolgen.

Gemäß einer besonderen Ausführungsform des erfindungsgemäßen Verfahrens wird vor dem Einbringen des flüssigen Kunststoffes eine vorgefertigte Materiallage in das Spritzgusswerkzeug eingelegt, wobei der flüssige Kunststoff anschließend bevorzugt zwischen einem inneren Formteil des Spritzgusswerkzeuges und der vorgefertigten Materiallage eingebracht wird. Das heißt, die Materiallage wird in das Spritzgusswerkzeug vor dem Schließen des Spritzgusswerkzeuges eingelegt, so dass die Materiallage dann nach dem Einspritzen des flüssigen Kunststoffes und dessen Erstarrung fest mit dem eingespritzten Kunststoffmaterial verbunden ist. Diese Materiallage bildet vorzugsweise die äußere Materiallage des zu fertigenden Spaltrohres, wozu der Kunststoff in den Raum zwischen der Materiallage und dem inneren Formteil eingespritzt wird. Diese Materiallage kann ein zusätzliches Verstärkungselement, beispielsweise aus Fasern bilden. Bevorzugt handelt es sich um ein Gewebe. Als Fasern können hier beispielsweise thermoplastische Fasern, Carbonfasern, Glasfasern, Metallfasern und/oder Aramidfasern oder andere geeignete Fasern Verwendung finden. Als Fasern könnten darüber hinaus auch Naturfasern, wie beispielsweise Hanf, Baumwolle oder Seide Verwendung finden.

Besonders bevorzugt ist die vorgefertigte Materiallage elastisch dehnbar und wird beim Einbringen des Kunststoffes gedehnt. Auf diese Weise kann eine Vorspannung der äußeren Materiallage im erstarrten Zustand des Kunststoffes erreicht werden. Diese Spannung in der äußeren Materiallage bewirkt einen nach innen gerichtet Druckkraft, welche die äußere Lage mit der inneren Lage in festem Kontakt hält. Dies führt zu einer erhöhten Festigkeit des Spaltrohres. Bezüglich weiterer Vorteile dieser Ausgestaltung, wird auf die obige Beschreibung verwiesen.

Die Dehnung der äußeren Materiallage beim Einspritzen des Kunststoffes ist vorzugsweise so groß, dass die Dehnung die spätere Schrumpfung des Kunststoffes bei dessen Erstarrung übersteigt. Auf diese Weise wird eine Dehnung der äußeren Materiallage auch im erstarrten Zustand des Spaltrohres aufrechterhalten, wodurch dann die genannte Vorspannung resultiert.

Gemäß einer weiteren bevorzugten Ausführungsform kann ein Teil des Spritzgusswerkzeuges beheizt werden. Dies können beispielsweise das innere und/oder das äußere Formteil sein. Durch Beheizung der Formteile können die Randschichten des Kunststoffes, welche an das jeweilige Formteil angrenzen, erwärmt bzw. langsamer abgekühlt werden, so dass die Erstarrung dieser Randschichten verzögert werden kann. Auf diese Weise ist es möglich auch in den Randschichten die Fasern durch Rotation der Formteile zueinander in Umfangsrichtung zu orientieren. So ist es möglich, in dem gesamten Kunststoffmaterial in radialer Dickenrichtung gesehen die Fasern in Umfangsrichtung zu orientieren. Auch ist es möglich, lediglich eine Randschicht auszubilden, in welcher die Fasern in axialer Richtung orientiert sind, wie oben beschrieben wurde.

Gemäß einer weiteren speziellen Ausführungsform des Verfahrens weist das Spritzgusswerkzeug, in welchem das Spaltrohr ausgebildet wird, einen Spalt auf, welcher zur Ausbildung eines sich radial erstreckenden Kragens an dem offenen Ende des zu fertigenden Spaltrohres ausgebildet ist. Während des Erstarrens des Kunststoffes, welcher in das Spritzgusswerkzeug und somit auch in diesen Spalt eingespritzt ist, wird auf zumindest eine der diesen Spalt definierenden Wandungen des Spritzgusswerkzeuges ein zu der gegenüberliegenden Wandung des Spaltes hin gerichteter Druck aufgebracht. D. h. der Spalt wird in seiner Breite durch Aufeinanderzubewegen der Wandungen verengt. Vorzugsweise weist das Werkzeug dazu eine Bodenplatte auf, welche dem äußeren Formteil gegenüber liegt. Diese Bodenplatte ist von dem äußeren Formteil beabstandet, um den Spalt zum Ausbilden des Kragens zu definieren. Während des Erstarrens wird die Bodenplatte auf das äußere Formteil zubewegt, so dass der Spalt verkleinert wird. Dieses Verfahren ist insbesondere dann von Vorteil, wenn der Spalt eine größere Breite aufweist, als der Spalt zwischen äußerem und innerem Formteil, welcher die Umfangswandung des zu fertigen Spaltrohres definiert. Auf diese Weise wird es möglich, ein Spaltrohr mit einer sehr dünnen Umfangswandung zu fertigen, welches jedoch an seinem offenen Stirnende einen Kragen von größerer Materialdicke aufweist. Durch das Aufbringen einer Druckkraft auf die Wandung des den Kragen formenden Spaltes bzw. durch Verkleinern der Spaltbreite während des Erstarrens wird verhindert, dass sich in diesem Bereich beim Erstarren Lunker oder ähnliche Hohlräume aufgrund der Schrumpfung des Kunststoffes bilden können.

Nachfolgend wird die Erfindung beispielhaft anhand der beigefügten Figuren beschrieben. In diesem zeigt:
- Fig. 1a bis 1d: schematisch den Spritzgießvorgang eines Spaltrohres gemäß der Erfindung,
- Fig. 2a bis 2c: die Ausrichtung der Fasern in einem erfindungsgemäßen Spaltrohr,
- Fig. 3: schematisch die Anordnung einer äußeren Gewebelage an einem Spritzgusswerkzeug,
- Fig. 4: schematisch ein geschlossenes Spritzgusswerkzeug mit eingelegter Gewebelage,
- Fig. 5a bis 5d: schematisch den Spritzgießvorgang eines Spaltrohres gemäß einer zweiten Ausführungsform der Erfindung,
- Fig. 6a bis 6c: die Spannungsverteilung in einem Spaltrohr gemäß einer bevorzugten Ausführungsform der Erfindung,
- Fig. 7: schematisch den Spritzgießvorgang eines Spaltrohres gemäß einer weiteren Ausführungsform der Erfindung,
- Fig. 8: schematisch ein Spritzgusswerkzeug für ein Spaltrohr gemäß einer weiteren Ausführungsform der Erfindung,
- Fig. 9: eine Schnittansicht eines in dem Spritzgusswerkzeug gemäß Fig. 8 gefertigten Spaltrohres,
- Fig.10a u. 10b: Ausgestaltungen eines Lagerhalters mit Lager,
- Fig. 11: eine Schnittansicht eines erfindungsgemäß hergestellten Spaltrohres und
- Fig. 12: eine Schnittansicht eines erfindungsgemäßen Spaltrohres gemäß einer weiteren Ausführungsform der Erfindung.

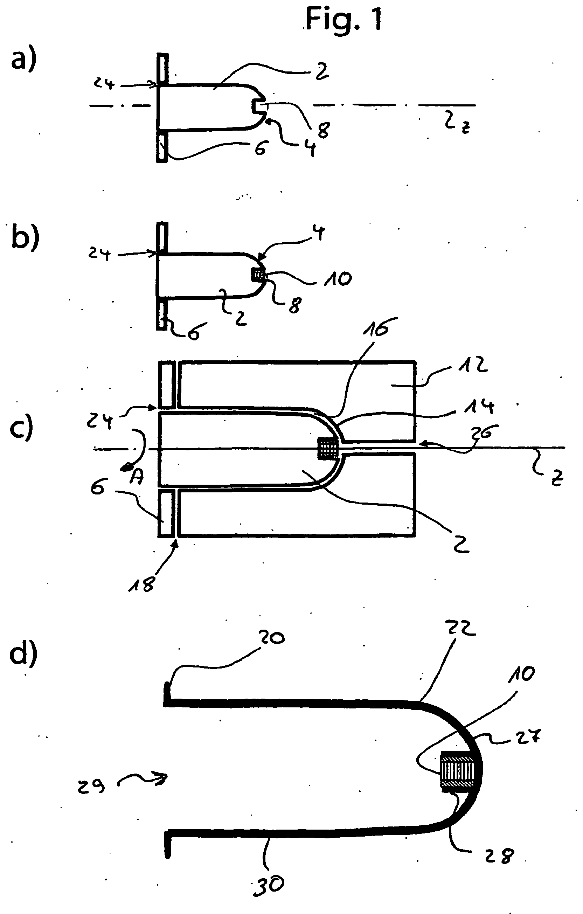

Anhand der Figuren 1a bis 1d wird zunächst schrittweise die Fertigung eines erfindungsgemäßen Spaltrohres erläutert. Fig. 1 a zeigt schematisch ein inneres Formteil 2 bzw. einen Kern 2 eines Spritzgusswerkzeuges zur Fertigung eines Spaltrohres. Das innere Formteil 2 definiert die Form des Innenraums des zu fertigenden Spaltrohres. Dabei definiert eine erste axiale Stirnseite 4 die Innenseite eines Bodens eines zu fertigenden Spaltrohres. Ein solches Spaltrohr ist an einem Axialende durch einen Boden verschlossen, d. h. topfförmig ausgebildet. Das entgegengesetzte Axialende des Spaltrohres ist offen ausgebildet und ist das Axialende, welches später an ein Pumpengehäuse angesetzt wird. Zur Ausgestaltung dieses offenen Axialendes des Spaltrohres ist das innere Formteil 2 an seinem der Stirnseite 4 abgewandten Ende an einer Bodenplatte 6 angebracht. Die Bodenplatte 6 erstreckt sich normal zur Längsachse Z des zu fertigenden Spaltrohres bzw. des inneren Formteiles 2 radial nach außen. An der axialen Stirnseite 4 ist eine zentrale Ausnehmung 8 ausgebildet, welche zur Aufnahme eines Lagers 10 dient, wie in Fig. 1d gezeigt ist. Das Lager 10 dient später in dem Spaltrohr zur Lagerung einer Rotorwelle des in dem Spaltrohr anzuordnenden Rotors. Wenn nur ein Lager 10 beschrieben wird, so ist zu verstehen, dass anstelle des Lagers 10 in identischer Weise auch ein Lagerhalter in die Ausnehmung 8 eingesetztwerden kann. Dann wird ein Lager in dem Lagerhalter montiert.

Nach dem Einsetzen des Lagers 10 in die Ausnehmung 8 wird das Spritzgusswerkzeug durch ein äußeres Formteil 12 verschlossen. Das äußere Formteil 12 weist in seinem Inneren eine Ausnehmung 14 auf, welche die Außenkontur des zu fertigenden Spaltrohres definiert. Zwischen der Wandung der Ausnehmung 14 in dem äußeren Formteil 12 und der Außenwandung des inneren Formteils 2 verbleibt im geschlossen Zustand des Spritzgusswerkzeuges ein Spalt 16, welcher der Form des zu fertigenden Spaltrohres entspricht. Auch verbleibt ein Spalt 18 zwischen der Bodenplatte 6 und dem äußeren Formteil 12, welcher sich ring- bzw. kragenförmig ausgehend von dem Spalt 16 in radialer Richtung bezogen auf die Längsachse Z erstreckt. Dieser Spalt dient zur Ausgestaltung eines Kragens 20 an dem offenen Axialende des Spaltrohres 22, wie es in Fig. 1d gezeigt ist.

Das innere Formteil 2 ist nicht fest mit der ringförmigen Bodenplatte 6 verbunden, sondern in einer kreisförmigen Ausnehmung in der Bodenplatte 6 angeordnet, so dass zwischen der Bodenplatte 6 und dem inneren Formteil 2 ein Ringspalt 24 verbleibt. Der Ringspalt 24 dient zum einen der Entlüftung des Spaltes 16 und zum anderen dazu, dass das innere Formteil 2 um die Längsachse Z in Richtung des Pfeils A relativ zu dem äußeren Formteil 12 und auch der Bodenplatte 6 rotieren kann.

Zum Spritzgießen des Spaltrohres wird ein flüssiges Kunststoffmaterial in einen Einspritzkanal 26 in Richtung der Längsachse Z eingespritzt. Der Einspritzkanal 26 mündet in den Spalt 16 zentral bezüglich der Längsachse Z, gegenüberliegend der axialen Stirnseite 4 des inneren Formteils 2, d. h. gegenüberliegend der Ausnehmung 8. Dadurch drückt beim Einspritzen der flüssige Kunststoff zunächst direkt gegen das eingesetzte Lager 10 und fixiert dies in der Ausnehmung 8 bzw. hält die dem Einspritzkanal 26 abgewandte Stirnseite des Lagers 10 in dichtender Anlage mit dem Boden der Ausnehmung 8.

Anschließend strömt der flüssige Kunststoff weiter durch den Spalt 16 zu dem Ringspalt 24 und dem sich radial erstreckenden Spalt 18.

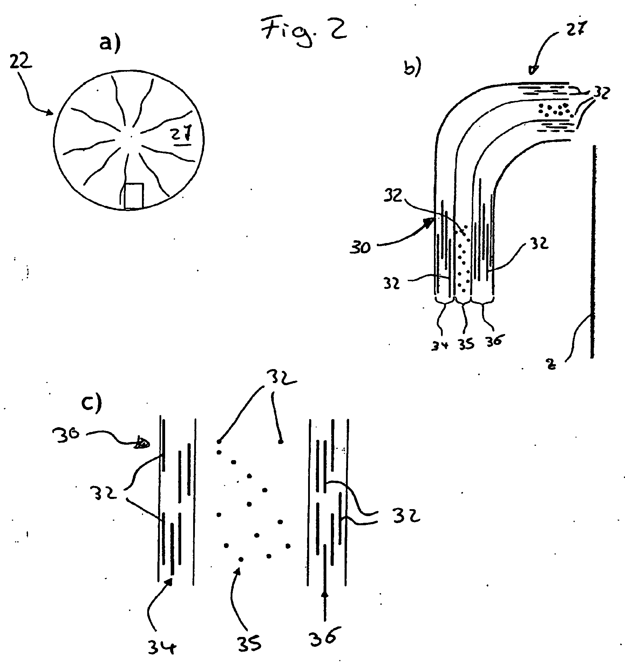

Erfindungsgemäß sind dem Kunststoff, welcher in das Spritzgusswerkzeug eingespritzt wird, einzelne Fasern zugesetzt, welche in dem Kunststoff vorzugsweise gleichmäßig verteilt sind. Während oder direkt nach dem Einspritzen des Kunststoffes wird das innere Formteil 2 in Richtung des Pfeils A um die Längsachse Z rotiert, während das äußere Formteil 2 und die Bodenplatte 6 feststehend verbleiben. Hierdurch kommt es zu einer speziellen Orientierung der Fasern, wie später anhand von Fig. 2 erläutert wird.

Fig. 1d zeigt das fertige Spaltrohr 22, in welches zentral im Boden 27 das Lager 10 eingegossen ist. Das Lager 10 ist dabei von einem Ring 28 aus Kunststoffmaterial umgeben, welcher vorzugsweise in eine Strukturierung an der Oberfläche des Lagers 10 eingreift. Am entgegengesetzten offenen Stirnende 29 ist der sich umfänglich, d. h. radial nach außen erstreckende Kragen 20 des Spaltrohres ausgebildet.
Anhand der Figuren 2a bis 2c wird nun die durch die Rotation des inneren Formteils 2 erreichte Ausrichtung der Fasern im Kunststoff näher erläutert.

Fig. 2a zeigt schematisch die Draufsicht auf den Boden 27 des Spaltrohres 22. Fig. 2b zeigt einen Schnitt des Übergangsbereiches zwischen Boden 27 und Umfangswandung 30 des Spaltrohres 22. Fig. 2c zeigt einen schematischen Ausschnitt der Umfangswandung 30. In dem Kunststoff der Wandung sind Fasern 32 in definierter Weise angeordnet. Im gezeigten Beispiel sind in dem Kunststoffmaterial in radialer Richtung bezüglich der Längsachse Z gesehen drei übereinanderliegende Schichten 34, 35 und 36 ausgebildet. Im Boden 27 liegen die Schichten entsprechend in axialer Richtung übereinander. Die Schichten 34 und 36 bilden Randschichten, welche den Wandungen des Spritzgusswerkzeuges zugewandt sind. Das heißt, die Schicht 34 grenzt an die Innenwandung der Ausnehmung 14 in dem äußeren Formteil 12 an und die Schicht 36 grenzt an die Außenseite des inneren Formteils 2 an. In den beiden äußeren Schichten 34 und 36 sind die Fasern 32 in der Fließrichtung des Kunststoffmaterials beim Einspritzen in den Spalt 16 in dem Spritzgusswerkzeug gerichtet. Das heißt, ausgehend von dem Einspritzkanal 26 ist die Fließrichtung im Boden 27 zunächst im Wesentlichen in radialer Richtung und in der Umfangswandung 30 in axialer Richtung bezüglich der Längsachse Z. Da die Randzonen 34 und 36 zuerst erstarren, bleibt dort die Ausrichtung der Fasern in der Fließrichtung erhalten. In der Schicht 35, welche von den Wandungen des inneren Formteiles 2 und des äußeren Formteiles 12 am Weitestens beabstandet ist, findet die Erstarrung später statt. Durch die Rotation des inneren Formteiles 2 relativ zu dem äußeren Formteil 12 wird erreicht, dass in dieser Mittelschicht 35 die Fasern 32 in Umfangsrichtung bezüglich der Längsachse Z orientiert sind. Durch diese Ausrichtung der Fasem 32 kann eine große Festigkeit des Spaltrohres erzieltwerden. Insbesondere kann die Mittelschicht besonders dick ausgebildet werden, beispielsweise mehr als 40%, vorzugsweise mehrals 60% der Gesamtdicke ausmachen, so dass ein großer Teil der Fasern in Umfangsrichtung orientiert ist und in dieser Richtung für eine erhöhte Festigkeit des Spaltrohres sorgt. In der schematisch in Figur 2b gezeigten Ausführungsform sind die Randschichten 34, 36 relativ dick ausgebildet, vorzugsweise sind die Randschichten 34 und 36, wie vorangehend erläutert dünn ausgebildet, sodass eine dickere Mittelschicht 35 entsteht, wie in Figur 2c gezeigt.

Im gezeigten Beispiel sind zwei Randschichten 34 und 36 mit axial gerichteten Fasern 32 vorgesehen. Durch entsprechende Einstellung der Parameter und insbesondere durch Beheizen des inneren Formteils 2 und/oder des äußeren Formteils 12 ist es jedoch auch möglich, nur eine oder keine derartiger Randschichten 34 und 36 auszubilden. Dazu muss der Kunststoff nach dem Einspritzen oder während des Einspritzens auch in der Nähe der Wandungen des Spritzgusswerkzeuges zunächst fließfähig gehalten werden, so dass durch Rotation des inneren Formteils 2 und des äußeren Formteils 12 eine umfängliche Ausrichtung der Fasern erreicht werden kann. Wird beispielsweise das innere Formteil 2 an seiner Oberfläche beheizt, kann auch in der Schicht 36 eine umfängliche Ausrichtung der Fasern 32 erreicht werden. Entsprechend kann auch in der Schicht 34 eine umfängliche Ausrichtung der Fasern 32 erreicht werden, wenn das äußere Formteil 12 an seiner Innenwandung in der Ausnehmung 14 erwärmt wird. Auf die Erwärmung kann möglicherweise auch verzichtet werden, wenn die Rotation schon während des Einspritzens des Kunststoffes stattfindet.

Vorangehend wurde beschrieben, dass das innere Formteil gedreht wird. Entsprechend ist es auch möglich, das äußere Formteil 12 zu drehen. Es kommt allein auf die relativ Bewegung beider Teile an.

Dadurch, dass beim Einspritzen der Kunststoff gegen das Lager 10 drückt und dies in fester Anlage in der Ausnehmung 8 hält, wird erreicht, dass das Lager 10 gemeinsam mit dem inneren Formteil 2 rotiert bzw. gedreht wird.

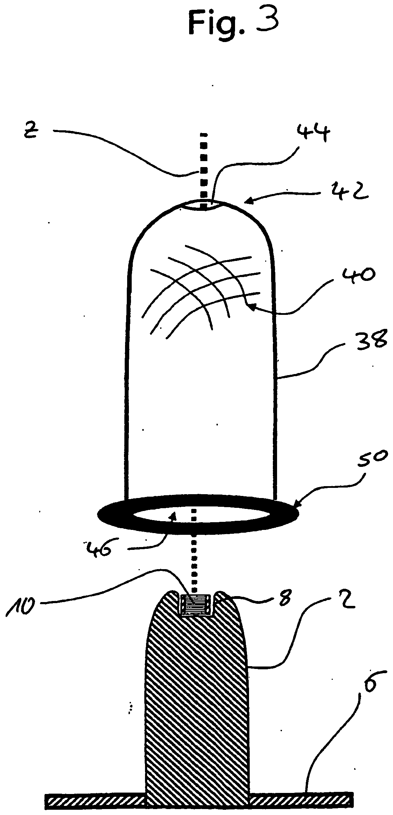

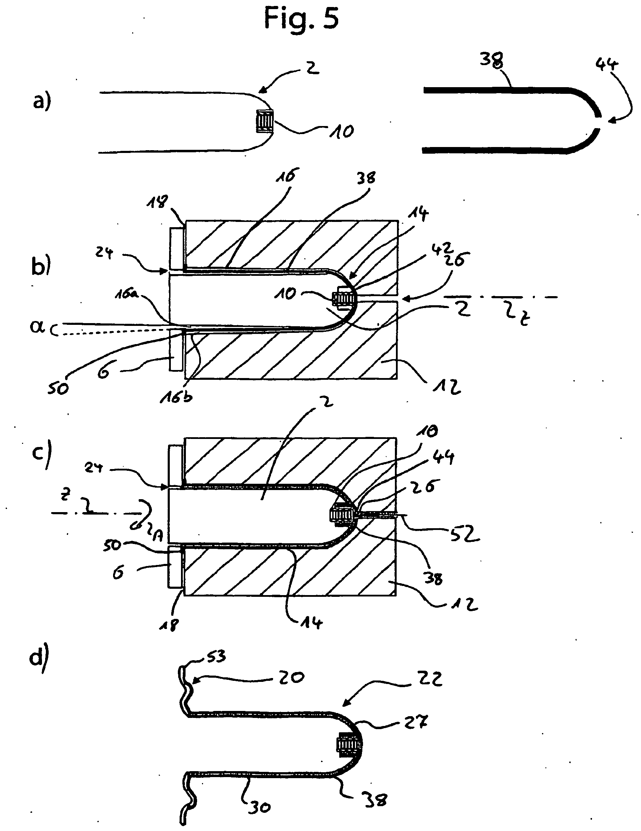

Fig. 3 zeigt das innere Formteil 2 mit dem eingelegten Lager 10 und der Bodenplatte 6. In Fig. 3 ist gezeigt, wie zunächst eine äußere Lage 38 aus einem gewebten Fasermaterial 40 auf das innere Formteil 2 aufgesetzt wird. Dabei hat die äußere Lage 38 im Wesentlichen bereits die Form des zu fertigenden Spaltrohres. Das heißt, die äußere Lage 38 ist im Wesentlichen topfförmig ausgebildet mit einem geschlossenen Stirnende 42. In dem Boden bzw. geschlossenen Stirnende 42 ist zentral eine Öffnung 44 ausgebildet, durch welche später, wie anhand von Fig. 5 erläutert werden wird, der flüssige Kunststoff in das Spritzgusswerkzeug eingespritzt wird.

Am entgegengesetzten offenen Axialende 46 weist die äußere Lage 38 einen sich radial nach außen erstreckenden Kragen 50 auf, welcher in dem Spalt 18 des Spritzgusswerkzeuges zu liegen kommt und später den Kragen 20 des Spaltrohres 22 verstärkt. Die äußere Lage 38 aus dem Gewebe dient einer zusätzlichen Verstärkung des Spaltrohres. Hier kann beispielsweise ein thermoplastisches Gewebe, ein Gewebe aus Metallfasern, Aramidfasern, Carbon- oder Glasfasern Verwendung finden.

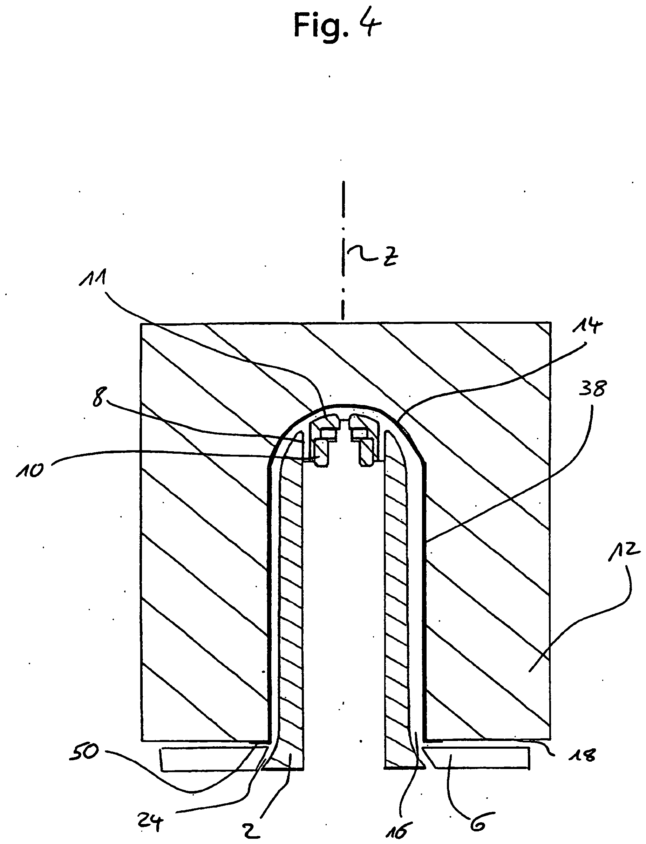

Fig. 4 zeigt eine Schnittansicht eines Spritzgusswerkzeuges mit der eingelegten Gewebelage 38, welche die äußere Lage der Wandung des Spaltrohres definiert. Ansonsten entspricht das Spritzgusswerkzeug dem in Fig. 1c gezeigten Spritzgusswerkzeug. In dem in Fig. 4 gezeigten Beispiels liegt die äußere Lage 38 direkt an der Innenwandung der Ausnehmung 14 des äußeren Formteiles 12 an. Das Kunststoffmaterial wird in den Spalt 16 zwischen dem inneren Formteil 2 und der äußeren Lage 38 gespritzt, wie nachfolgend anhand von Fig. 5 erläutert wird. Dies kann in axialer Richtung entweder durch eine zentrale Öffnung in dem inneren Formteil 2 oder auch durch einen Einspritzkanal 26, wie in Fig. 1 gezeigt ist, geschehen, wobei dieser Einspritzkanal in Fig. 4 nicht gezeigt ist. In dem Fall, dass eine zentrale Öffnung in dem Inneren Formteil 2 ausgebildet wird, wird das innere Formteil bevorzugt zweiteilig ausgebildet, mit einem feststehenden Mittelteil, in dem die Öffnung ausgebildet ist. Der umgebende Teil des inneren Formteils, welcher dem äußeren Formteil 12 zugewandt ist, ist drehbar um dieses feststehende Mittelteil angeordnet und kann relativ zu dem äußeren Formteil 12 in der beschriebenen Weise gedreht werden. Durch den feststehenden Mittelteil wird dabei gewährleistet, dass die Öffnung, durch welche der Kunststoff eingespritzt wird, nicht rotiert.

An dem inneren Formteil 2 ist in die strinseitige Ausnehmung 8 ein Lagerhalter 11 mit einem Lager 10 eingesetzt. Zu erkennen ist, dass umfänglich des Lagerhalters 11 zu der Innenwandung der Ausnehmung 8 ein Spalt verbleibt, welcher später mit Kunststoff gefüllt wird, so dass der Lagerhalter 11 umfänglich von Kunststoff umschlossen wird.

Fig. 5a zeigt schematisch das innere Formteil 2 mit dem eingelegten Lager 10 entsprechend der Darstellung in Fig. 1 d. Es wird auf die diesbezügliche Beschreibung verwiesen. Ferner ist rechts in Fig. 5a die äußere Lage 38 mit der Öffnung 44 gezeigt. Diese wird auf das innere Formteil 2 aufgesetzt. Anschließend wird das äußere Formteil 12 auf das innere Formteil 2 aufgesetzt, wie in Fig. 5b gezeigt ist. Das Material der äußeren Lage 38 ist ein elastisch dehnbares Material. Dies kann durch entsprechende elastische Ausbildung der einzelnen Fasern, aus welchen die äußere Lage 38 gefertigt ist, oder auch durch spezielle Ausgestaltung des Gewebes der äußeren Lage 38 erreicht werden. Wie zu erkennen ist, ist die Dicke der äußeren Lage 38 geringer als die Breite des Spaltes 16. Die Lage 38 ist derart in den Spalt 16 eingelegt, dass sie zumindest in Abschnitten, insbesondere in Abschnitten der Umfangswandung 30 des zu formenden Spaltrohres nicht an der Innenwandung der Ausnehmung 14 in dem äußeren Formteil 12 anliegt. So entsteht ein Spalt 16b zwischen der äußeren Lage 38 und dem äußeren Formteil 12. Gleichzeitig liegt die äußere Lage 38 im Bereich der Umfangswandung jedoch auch nicht an der Wandung des inneren Formteils 2 an, so dass dort ein Spalt 16a gebildet wird. Lediglich mit dem axialen Stirnende, in dem die Öffnung 44 angeordnet ist, liegt die äußere Lage 38 die Öffnung des Einspritzkanals 26 umgebend an der Innenwandung der Ausnehmung 14 an.

Wie in Fig. 5b ferner zu erkennen ist, ist der Umfangsbereich der äußeren Lage 38 nicht ganz zylindrisch ausgebildet, sondern weitet sich ausgehend von dem Stirnseite 42 um einen Winkel a zu dem entgegengesetzten Axialende hin auf. Dadurch wird erreicht, dass an dem der Bodenplatte 6 zugewandten Axialende die äußere Lage 38 nicht an der Außenwandung des inneren Formteils 2 anliegt. So kann eine Entlüftung durch den Ringspalt 24 erfolgen.

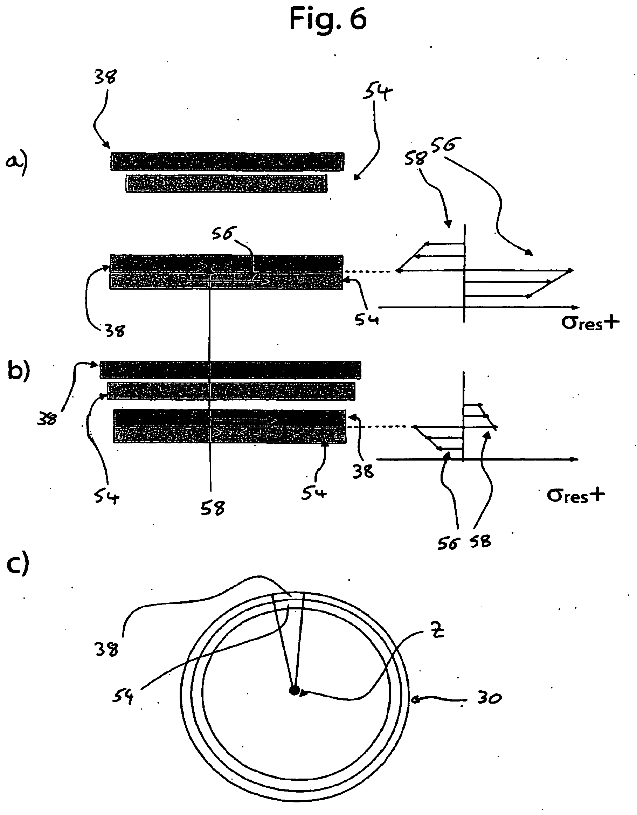

Wie bereits anhand von Fig. 1c erläutert wurde, wird anschließend, wie in Fig. 5c dargestellt, flüssiger Kunststoff 52 in den Einspritzkanal 26 eingespritzt und strömt dort durch die Öffnung 44 in der äußeren Lage 38 in den Spalt 16a zwischen der äußeren Lage 38 und dem inneren Formteil 2. Dadurch wird die äußere Lage 38 gedehnt, wodurch sich der Spalt 16a vergrößert und der Spalt 16b verschwindet, d. h. die äußere Lage 38 kommt direkt an der Innenwandung der Ausnehmung 14 in dem äußeren Formteil 12 zur Anlage. Dabei wird die äußere Lage 38 , insbesondere in Umfangsrichtung bezogen auf die Längsachse Z gedehnt. Der Kragen 50 der äußeren Lage 38 liegt in dem Spalt 18 zwischen Bodenplatte 6 und äußeren Formteil 2. Während und/oder nach dem Einspritzen des Kunststoffes 52 wird das innere Formteil 2 relativ zu dem äußeren Formteil 12 in Richtung A um die Längsachse Z gedreht, wie anhand von Fig. 1 beschrieben wurde. Dadurch kommt es zu der vorangehend beschriebenen Ausrichtung der Fasern 32, welche dem Kunststoff 52 beigemischt sind. Die äußere Lage 38 ist dabei drehfest zu dem äußeren Formteil 12. Insofern rotiert das innere Formteil 2 auch relativ zu der äußeren Lage 38. Dabei wird dann die anhand von Fig. 2 beschriebene äußere Randschicht 34 vorzugsweise an der Innenseite der äußeren Lage 38 ausgebildet. Fig. 5d zeigt das fertige wie anhand von Figuren 5a bis c beschrieben, gefertigte Spaltrohr 22. In diesem Spaltrohr 22 ist insbesondere in der Umfangswandung 30 eine spezielle Spannungsverteilung gegeben, wie anhand Fig. 6 erläutert wird.

Wie in Fig. 5d gezeigt, weist der Kragen 20 einen Kragenteil 53 auf, welcher sich in radialer Richtung über die Ausdehnung der äußeren Lage 38 in dem Kragen 20 radial nach außen erstreckt. Dieser Teil ist nur durch den Kunststoff 52 der inneren Lage spritzgegossen. Um in diesem Teil des Kragens 20 eine ausreichende Dichte des Materials zu erzielen und insbesondere Lunker aufgrund der Schrumpfung des Kunststoffes 52 beim Erstarren zu vermeiden, wird über die Bodenplatte 6 bevorzugt ein Druck in Richtung des äußeren Formteils 12 ausgeübt, wodurch der Spalt 18 verkleinert wird.

Wie in Fig. 6c schematisch gezeigt, bildet der Kunststoff 52 die innere Lage 54, welche an der Innenwandung der äußeren Lage 38 anliegt. Beide Lagen 38, 54 bilden gemeinsam die Umfangswandung 30 des Spaltrohres 22.

Durch die Dehnung des der äußeren Lage 38 beim Einspritzen des Kunststoffes 52 wird eine Vorspannung erreicht. Anhand von Fig. 6a wird zunächst die Situation ohne die Dehnung der äußeren Lage 38, d. h. ohne Vorspannung betrachtet. Oben in Fig. 6a sind die äußere Lage 38 und die innere Lage 54, welche aus dem Kunststoff 52 geformt ist, getrennt voneinander dargestellt. Zu erkennen ist, dass die innere Lage 54 bei der Erstarrung geschrumpft ist gegenüber der äußeren Lage 38. Wenn die äußere Lage 38 und die innere Lage 54 fest miteinander verbunden sind, wie in Fig. 3a, 6a unten gezeigt ist, führt dies dazu, dass aufgrund der Schrumpfung der inneren Lage 54, diese Zugspannungen 56 und die äußere Lage 38 Druckspannungen 58 ausgesetzt ist. Dies führt dazu, dass die miteinander verbundene äußere 38 und innere Lage 54 dazu streben, sich voneinander zu trennen bzw. zu deleminieren.

Fig. 6b zeigt nun die erfindungsgemäße Ausgestaltung, gemäß derer die äußere Lage 38 elastisch dehnbar ausgebildet ist. In Fig. 6b oben ist zunächst schematisch die äußere Lage 38 und die innere Lage 54 im nicht miteinander verbundenen Zustand gezeigt. In Fig. 6b unten sind die beiden Lagen 38, 54 im verbundenen Zustand gezeigt. Beim Einspritzen des Kunststoffes 52 wird die äußere Lage 38, wie oben beschrieben, zunächst elastisch gedehnt bzw. aufgeweitet. Dabei wird sie stärker gedehnt, als der Kunststoff 52 später bei der Erstarrung schrumpft. Wenn nun der Kunststoff 52 erstarrt und schrumpft, führt dies dazu, dass die äußere Lage 38 eine gewisse Dehnung und damit eine gewisse Vorspannung behält. Insgesamt wird dadurch erreicht, dass die äußere Lage 38 im erstarrten Zustand Zugspannungen 56 ausgesetzt ist, während die innere Lage 54 im erstarrten Zustand Druckspannungen 58 ausgesetzt ist. Diese Spannungen bewirken, dass die äußere Lage 38 und die innere Lage 54 in radialer Richtung bezogen auf die Längsachse Z gegeneinander gepresst werden und im verbundenen Zustand gehalten werden. Darüber hinaus können die Zugspannungen 56 in der äußeren Lage 4 im inneren des Spaltrohrs 22 auftretenden Drücken entgegenwirken. Auf diese Weise wird eine erhöhte Stabilität des Spaltrohres 22 erreicht, wobei gleichzeitig die Wandstärke gering gehalten werden kann. Ferner wirken die Zugspannungen 56 in der äußeren Lage 38 einer Rissbildung in der inneren Lage 54 entgegen, wodurch eine größere Dichtigkeit des Spaltrohres erreicht werden kann.

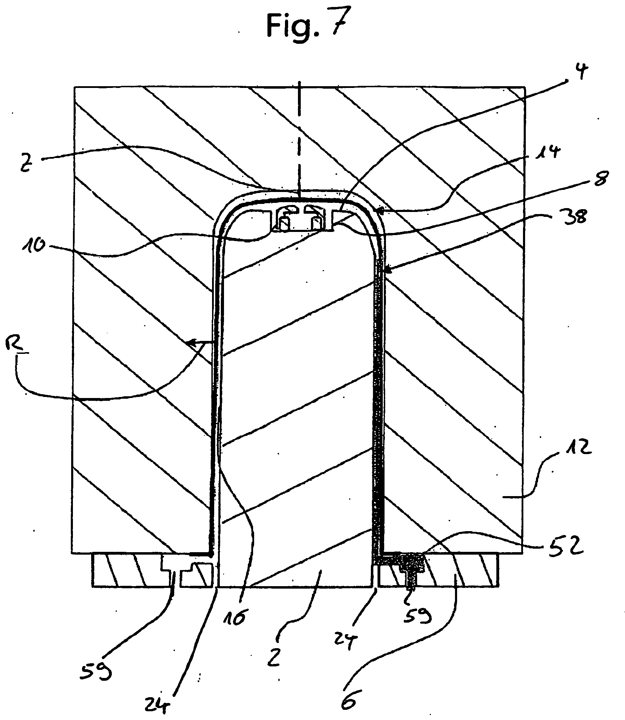

In dem Beispiel gemäß Fig. 5 wurde der Kunststoff durch einen Einspritzkanal 52, welcher dem geschlossenen Stirnende bzw. dem Boden 27 des zu fertigenden Spaltrohres gegenüberliegt, eingespritzt. Fig. 7 zeigt nun schematisch eine Ausführungsform, bei welcher der flüssige Kunststoff 52 vom entgegengesetzten Ende her eingespritzt wird. In der Darstellung gemäß Fig. 7 ist die äußere Lage 38 entsprechend der Beschreibung zu Fig. 5d in den Spalt 16 zwischen äußeren Formteil und im inneren Formteil 2 eingelegt. Die äußere Lage 38 weist jedoch keine Öffnung 44 auf und der Kunststoff wird durch Öffnungen 59 vom axialen Ende, d. h. ausgehend vom offenen Stirnende 29 des Spaltrohres 22, welches gegossen werden soll, her eingespritzt. Dabei fließt der Kunststoff in axialer Richtung, d. h. parallel zur Längsachse Z durch den Spalt 16 zu dem Boden des zu formenden Spaltrohres, d. h. dem Boden der Ausnehmung 14 des äußeren Formteils 12 hin. Dadurch erfährt die äußere Lage 38 auch eine Dehnung in axialer Richtung, d. h. in Richtung der Längsachse Z. Dazu ist die äußere Lage 38 in ihrer Ausgangslage so in dem Spalt 16 angeordnet, dass sie auch am Boden der Ausnehmung 14, d. h. gegenüberliegend der axialen Stirnseite 4 des inneren Formteils 2 nicht an der Wandung der Ausnehmung 14 anliegt. Durch den einströmenden Kunststoff 52 wird die äußere Lage 38 dann auch in axialer Richtung gedehnt, so dass sie auch am Boden der Ausnehmung 14 zur Anlage kommt. Auf diese Weise kann eine Vorspannung auch in axialer Richtung erreicht werden. Das innere Formteil 2 wird zur Orientierung der Fasern in dem Kunststoff 52 in der oben anhand der anderen Figuren beschriebenen Weise gedreht.

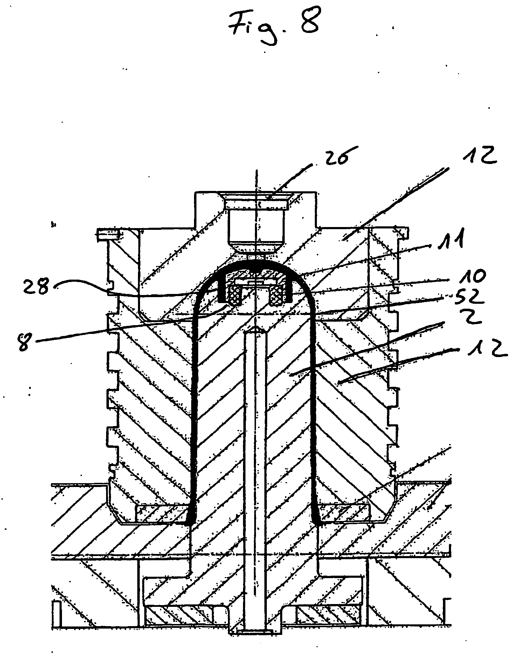

Fig. 8 zeigt ein Spritzgusswerkzeug bestehend aus innerem Formteil 2 und äußerem Formteil 12 mit bereits eingespritzten Kunststoff 52, welcher ein Spaltrohr 22 ausbildet. Die Ausführungsform entspricht im Wesentlichen der anhand von Figuren 1c und d sowie Fig. 4 beschriebenen Ausführungsform, so dass auf die diesbezügliche Beschreibung verwiesen wird. Im Unterschied zu der Ausführungsform gemäß Fig. 4 ist bei der Ausführungsform gemäß Fig. 8 keine äußere Lage 38 vorgesehen. Insofern entspricht hier das Verfahren dem anhand von Fig. 1 erläuterten. Im Unterschied zu Fig. 1 ist hier jedoch nicht das Lager 10 direkt in dem Kunststoff 52 angeordnet, sondern in einen umgebenden Lagerhalter 11, welcher von dem Kunststoff 52 umflossen wird. Um den Ring 28 aus Kunststoff, welcher anhand von Fig. 1d beschrieben wurde, auszubilden, verbleibt, wenn der Lagerhalter 11 mit dem Lager 10 in die Ausnehmung 8 des inneren Formteils 2 eingesetzt ist, zwischen der Umfangswandung der Ausnehmung 8 und der Außenwandung des Lagers 10 bzw. des Lagerhalters 11 ein Spalt welcher den Ring 28 aus Kunststoff definiert.

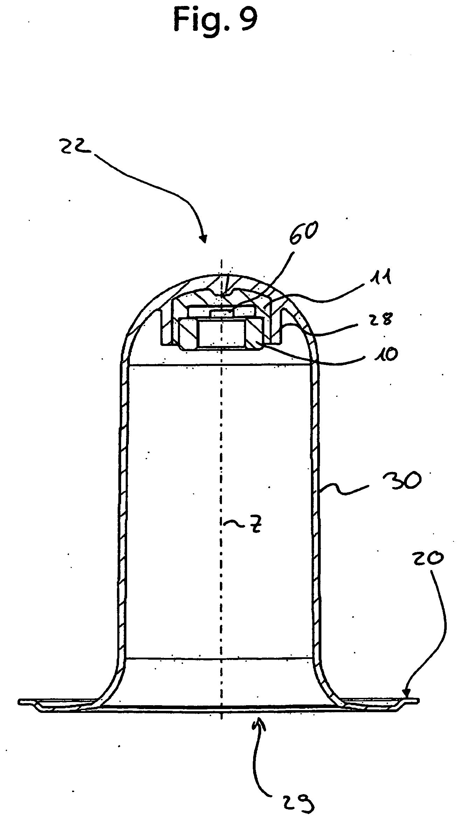

Fig. 9 zeigt das gemäß Fig. 8 gefertigte Spaltrohr. Dieses Spaltrohr 22 entspricht im Wesentlichen dem in Fig. 1 gezeigten Spaltrohr mit dem Unterschied, dass das Lager 10 nicht direkt eingegossen sondern von einem Lagerhalter 11 umgeben ist. In dem Lagerhalter 11 sind über den Umfang verteilt sich axial parallel zur Längsachse Z erstreckende Nuten 60 ausgebildet, welche dafür sorgen, dass das Lager 10 später von dem Fluid im Inneren des Spaltrohrs 22 durch die Nuten 60 umspült werden kann. So kann das Fluid später in den Freiraum zwischen Lager 10 und Lagerhalter 11 eindringen. Dies sorgt für eine bessere Kühlung des Lagers 10 und ferner dafür, dass Lager 10 und Lagerhalter 11 möglichst auf gleichem Temperaturniveau gehalten werden, um thermische Spannungen zu vermeiden.

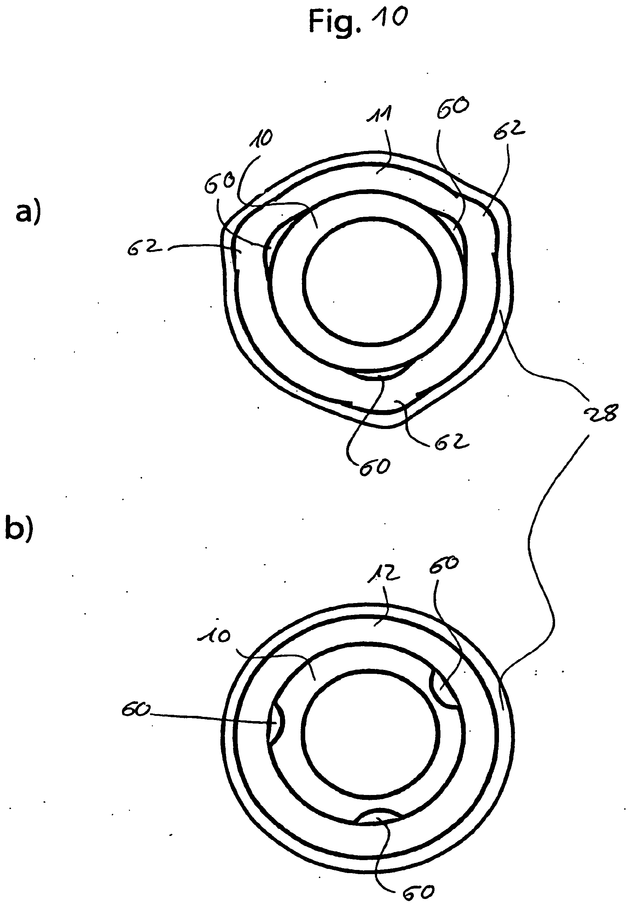

Die Ausgestaltung dieser Nuten wird näher anhand von Fig. 10a erläutert. Bei der Ausführungsform gemäß Fig. 10a weist der Lagerhalter 11, welcher im Wesentlichen ringförmig ausgebildet ist, drei Ausstülpungen 62 auf, durch welche an seinem Innenumfang die drei Nuten 60 ausgebildet werden. Das eingesetzte Lager 10 ist an seiner Außenkontur zylindrisch ausgebildet, so dass an den Nuten 60 Freiräume zwischen Lagerhalter und Lager 10 entstehen.

Fig. 10b zeigt eine zweite Ausführungsform, bei welcher die Nuten 60 nicht am Innenumfang des Lagerhalters 11 sondern am Außenumfang des Lagers 10 ausgebildet sind.

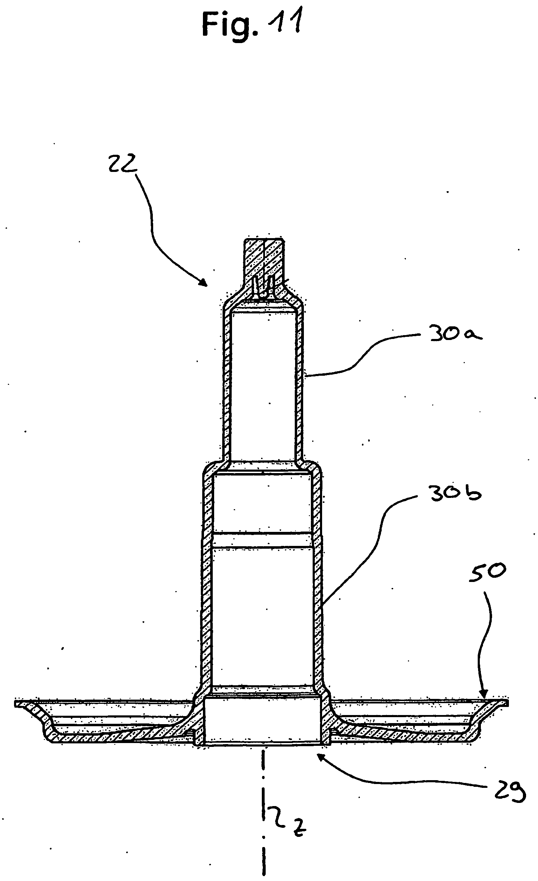

Fig. 11 zeigt eine Schnittansicht eines erfindungsgemäßen ausgebildeten Spaltrohres. Das Spaltrohr 22 gemäß Fig. 11 entspricht bezüglich der vorangehend beschriebenen Orientierung der Fasern 32 in seinem Inneren der vorangehenden Beschreibung. Im Unterschied zu den zuvor beschriebenen Spaltrohren ist das Spaltrohr gemäß Fig.11 nicht mit konstantem Durchmesser ausgebildet. Es weist zwei Abschnitte 30a und 30b der Umfangswandung auf, welche in Richtung der Längsachse Z hintereinanderliegend angeordnet sind. In dem Abschnitt 30a sind sowohl Durchmesser als auch Wandstärke kleiner ausgebildet als in dem Abschnitt 30b. Dies wird dadurch erreicht, dass der Spalt 16 zwischen dem inneren Formteil 2 und dem äußeren Formteil 12 entsprechend unterschiedlich breit bzw. gestuft ausgebildet wird.

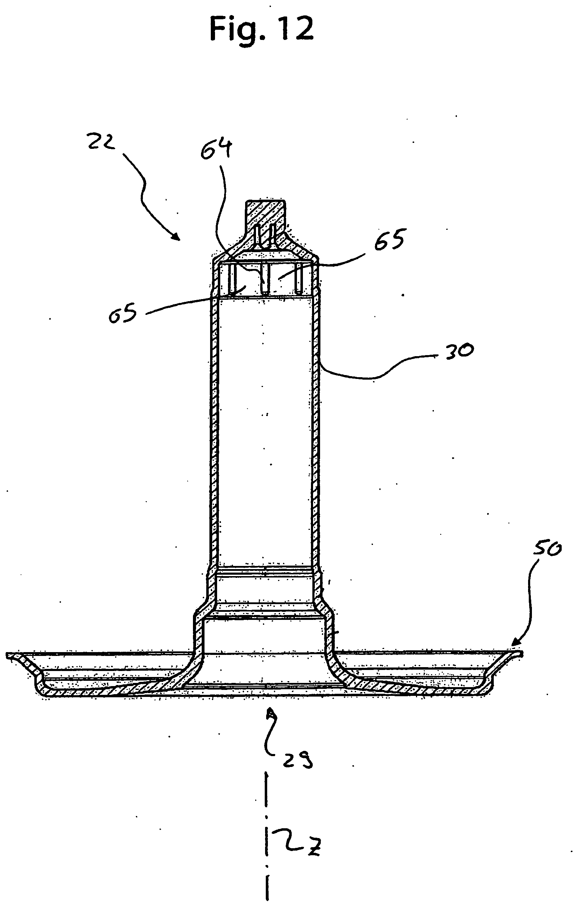

Fig. 12 zeigt ein weiteres Ausführungsbeispiel eines erfindungsgemäßen Spaltrohres 22, wobei auch hier die Orientierung der Fasern der vorangehenden Beschreibung entspricht. Das in Fig. 12 gezeigte Spaltrohr weist kein eingegossenes Lager auf. In dem dem offenen Ende 29 abgewandten Abschnitt sind in dem Spaltrohr 22 über den Innenumfang verteilt sich parallel zur Längsachse Z erstreckende Vorsprünge 64 ausgebildet, welche später an der Außenwandung des Lagers 10 zur Anlage kommen: Das heißt, das Lager wird zwischen den Vorsprüngen 64 vorzugsweise kraftschlüssig fixiert und zentriert. In Umfangsrichtung zwischen den Vorsprüngen 64 verbleiben dabei Freiräume 65, welche die gleiche Funktion wie die vorangehend beschriebenen Nuten 60 haben.

### Bezugszelchenliste

- 2 -: inneres Formteil
- 4 -: axiale Stirnseite
- 6 -: Bodenplatte
- 8 -: Ausnehmung
- 10 -: Lager
- 11 -: Lagerhalter
- 12-: äußeres Formteil
- 14-: Ausnehmung
- 16, 16a,16b-: Spalt
- 18 -: Spalt
- 20 -: Kragen
- 22 -: Spaltrohr
- 24 -: Ringspalt
- 26 -: Einspritzkanal
- 27 -: Boden
- 28 -: Ring
- 29 -: offenes Stirnende
- 30, 30a, 30b -: Umfangswandung
- 32 -: Fasern
- 34,35,36 -: Schichten
- 38 -: äußere Lage
- 40 -: Fasermaterial
- 42 -: Stirnende
- 44 -: Öffnung
- 48 -: Axialende
- 50 -: Kragen
- 52 -: Kunststoff
- 53 -: Kragenteil
- 54 -: innere Lage
- 56 -: Zugspannungen
- 58 -: Druckspannungen
- 59 -: Öffnungen
- 60 -: Nut
- 62 -: Ausstülpung
- 64 -: Vorsprünge
- Z -: Längsachse
- R -: radiale Richtung
- A -: Drehrichtung

## Patentansprüche

1. Spaltrohr eines Antriebsmotors für ein Pumpenaggregat, wobei das Spaltrohr (22) zumindest teilweise aus Kunststoff (52) gefertigt ist, wobei der Kunststoff (52) zumindest in einem Teil des Spaltrohres (22) durch einzelne in dem Kunststoff (52) verteilte Fasern (32) verstärkt ist, **gekennzeichnet durch** drei in radialer Richtung übereinanderliegende und aneinander angrenzende Schichten (34, 35, 36), wobei in einer mittlerenSchicht (35) die Fasern (32) in Umfangsrichtung bezogen auf die Längsachse (Z) des Spaltrohres (22) ausgerichtet sind, und in angrenzenden äußeren Schichten (34, 36) die Fasern (32) in axialer Richtung bezogen auf die Längsachse (Z) des Spaltrohres (22) ausgerichtet sind und wobei die äußeren Schichten (34, 36) Randschichten bilden und eine geringere Schichtdicke als die mittlere Schicht aufweisen.

2. Spaltrohr nach einem der vorangehenden Ansprüche, **dadurch gekennzeichnet, dass** das Spaltrohr (22) an einem Axialende (29) offen ausgebildet ist und einen radial nach außen gerichteten Kragen (20) aufweist, wobei in dem Kragen (20) die Fasern (32) in zumindest einer Schicht des Kunststoffes (52) radial zur Längsachse (Z) des Spaltrohres (22) ausgerichtet sind.

3. Spaltrohr nach einem der vorangehenden Ansprüche, **dadurch gekennzeichnet, dass** das Spaltrohr (22) eine äußere Lage (38) aus einem vorgespannten Material und eine innere Lage (54) aufweist, welche aus Kunststoff (52) ausgebildet ist, der durch einzelne in dem Kunststoff verteilte Fasern (32) verstärkt ist, wobei die Fasern (32) in zumindest einer Schicht (35) der inneren Lage (54) definiert in Umfangsrichtung bezogen auf die Längsachse (Z) des Spaitrohres (22) ausgerichtet sind.

4. Spaltrohr nach einem der vorangehenden Ansprüche, **dadurch gekennzeichnet, dass** in den Kunststoff (52) des Spaltrohres (22) ein Lager (10), welches zur Lagerung eines Rotors vorgesehen ist, oder ein Lagerhalter (11), welcher zur Aufnahme eines Lagers (10) zur Lagerung eines Rotors vorgesehen ist, eingegossen ist.

5. Spaltrohr nach Anspruch 4, **dadurch gekennzeichnet, dass** das Lager (10) oder der Lagerhalter (11) aus einem Material, welches eine größere Härte und/oder Steifigkeit als der Kunststoff (52) des Spaltrohres (22) aufweist, und insbesondere aus Metall gefertigt ist.

6. Spaltrohr nach Anspruch 4 oder 5, **dadurch gekennzeichnet, dass** zumindest eine Oberfläche des Lagers (10) oder des Lagerhalters (11), welche mit dem Kunststoff (52) des Spaltrohres (22) in Kontakt ist, mit einer Oberflächen-Strukturierung, insbesondere einer Makro- oder Mikro-Strukturierung versehen ist.

7. Spaltrohr nach Anspruch 6, **dadurch gekennzeichnet, dass** in die zumindest eine Oberfläche Vorsprünge, Vertiefungen und/oder Löcher eingebracht sind.

8. Spaltrohr nach einem der Ansprüche 4 bis 7, **dadurch gekennzeichnet, dass** in dem Lager (10) oder dem Lagerhalter (11) Nuten (60) oder Kanäle ausgebildet sind, welche sich parallel zur Längsachse (Z) des Spaltrohres (22) über die axiale Länge des Lagers (10) oder Lagerhalters (11) erstrecken.

9. Verfahren zum Herstellen eines Spaltrohres eines Antriebsmotors für ein Pumpenaggregat, wobei flüssiger Kunststoff (52), welchem zur Verstärkung einzelne Fasern (32) zugemischt sind, in ein Spritzgusswerkzeug eingebracht wird, welches die Form des zu fertigenden Spaltrohres (22) definiert, wobei der flüssige Kunststoff (52) in axialer Richtung parallel zur Längsachse (Z) des zu fertigenden Spaltrohres (22) in den Teil des Spritzgusswerkzeuges, welcher die Umfangswandung (30) des Spaltrohres (22) formt, einströmt, **dadurch gekennzeichnet, dass** während des Einbringens und/oder nach dem Einbringen des Kunststoffes (52) ein inneres Formteil (2) des Spritzgusswerkzeuges relativ zu einem äußeren Formteil (12) des Spritzgusswerkzeuges rotiert wird.

10. Verfahren nach Anspruch 9, **dadurch gekennzeichnet, dass**, bevor der flüssige Kunststoff (52) in das Spritzgusswerkzeug eingebracht wird, ein Lager (10) oder ein Lagerhalter (11) in definierter Position in das Spritzgusswerkzeug eingelegt wird.

11. Verfahren nach Anspruch 10, **dadurch gekennzeichnet, dass** das Lager (10) oder der Lagerhalter (11) in eine Ausnehmung (8) in dem Spritzgusswerkzeug, insbesondere an dem inneren Formteil (2) des Spritzgusswerkzeuges eingelegt wird.

12. Verfahren nach Anspruch 11, **dadurch gekennzeichnet, dass** das Lager (10) oder der Lagerhalter (11) in eine Ausnehmung (8) an dem inneren Formteil (2) eingelegt wird und dort während des Einbringens des flüssigen Kunststoffes (52) durch den Druck des Kunststoffes (52) in Anlage an zumindest einer Oberfläche des Formteils (2) gehalten wird.

13. Verfahren nach einem der Ansprüche 10 bis 12, **dadurch gekennzeichnet, dass** vor dem Einlegen in das Spritzgusswerkzeug an zumindest einer Oberfläche des Lagers (10) oder Lagerhalters (11), welche dazu vorgesehen ist, mit dem Kunststoff (52) in Kontakt zu kommen, eine Strukturierung, insbesondere eine Makro- und/oder Mikrostrukturierung ausgebildet wird.

14. Verfahren nach Anspruch 13, **dadurch gekennzeichnet, dass** die Strukturierung mittels Laser- oder Elektrodenstrahl in die Oberfläche eingebracht wird.

15. Verfahren nach einem der Ansprüche 9 bis 14, **dadurch gekennzeichnet, dass** vor dem Einbringen des flüssigen Kunststoffes (52) eine vorgefertigte Materiallage (38) in das Spritzgusswerkzeug eingelegt wird, wobei der flüssige Kunststoff (52) anschließend bevorzugt zwischen einem inneren Formteil (2) des Spritzgusswerkzeuges und der vorgefertigten Materiallage (38) eingebracht wird.

16. Verfahren nach Anspruch 15, **dadurch gekennzeichnet, dass** die vorgefertigte Materiallage (38) elastisch dehnbar ist und beim Einbringen des Kunststoffes (52) gedehnt wird.

17. Verfahren nach einem der Ansprüche 9 bis 16, **dadurch gekennzeichnet, dass** zumindest ein Teil des Spritzgusswerkzeuges beheizt wird.

18. Verfahren nach einem der Ansprüche 9 bis 17, **dadurch gekennzeichnet, dass** das Spritzgusswerkzeug einen Spalt (18) aufweist, welcher zur Ausbildung eines sich radial erstreckenden Kragens (20) an dem offenen Ende des zu fertigenden Spaltrohres (22) ausgebildet ist, wobei während des Erstarrens des Kunststoffes (52) auf zumindest eine der den Spalt (18) definierenden Wandungen des Spritzgusswerkzeuges ein zu der gegenüberliegenden Wandung hin gerichteter Druck aufgebracht wird.

## Claims

1. A can of a drive motor for a pump assembly, wherein the can (22) is manufactured at least partly of plastic (52), wherein the plastic (52) at least in a part of the can (22) is reinforced by individual fibres (32) which are distributed in the plastic (52), **characterised by** three layers (34, 35, 36) which lie above one another in the radial direction and which are adjacent one another, wherein in a middle layer (35) the fibres (32) are aligned in the peripheral direction with respect to the longitudinal axis (Z) of the can (22), and in adjacent outer layers (34, 36) the fibres (32) are aligned in the axial direction with respect to the longitudinal axis (Z) of the can (22) and wherein the outer layers (34, 36) form edge layers and have a lower layer thickness than the middle layer.

2. A can according to one of the preceding claims, **characterised in that** the can (22) is designed open at an axial end (29) and comprises a radially outwardly directed collar (20), wherein in the collar (20) the fibres (32) in at least one layer of the plastic (52) are aligned radially to the longitudinal axis (Z) of the can (22).

3. A can according to one of the preceding claims, **characterised in that** the can (22) comprises an outer ply (38) of a prestressed material and an inner ply (54) which is formed of plastic (52) which reinforced by individual fibres (32) which are distributed in the plastic, wherein the fibres (32) in at least one layer (35) of the inner ply (54) are aligned in a defined manner in the peripheral direction with respect to the longitudinal axis (Z) of the can (22).

4. A can according to one of the preceding claims, **characterised in that** a bearing (10) which is provided for mounting the rotor, or a bearing holder (11) which is provided for receiving a bearing (10) for mounting a rotor, is moulded into the plastic (52) of the can (22).

5. A can according to claim 4, **characterised in that** the bearing (10) or the bearing holder (11) is manufactured of a material which has a greater hardness and/or stiffness than the plastic (52) of the can (22), and in particular is manufactured from metal.

6. A can according to claim 4 or 5, **characterised in that** at least one surface of the bearing (10) or of the bearing holder (11), said surface being in contact with the plastic (52) of the can (22), is provided with a surface structuring, in particular a macro-structuring or micro-structuring.

7. A can according to claim 6, **characterised in that** projections, recesses and/or holes are incorporated into the at least one surface.

8. A can according to one of the claims 4 to 7, **characterised in that** grooves (60) or channels are formed in the bearing (10) or the bearing holder (11), said grooves or channels extending parallel to the longitudinal axis (Z) of the can (22) over the axial length of the bearing (10) or bearing holder (11).

9. A method for manufacturing a can of a drive motor for a pump assembly, wherein fluid plastic (52), to which individual fibres (32) are admixed for reinforcement, is introduced into an injection moulding tool which defines the shape of the can (22) to be manufactured, wherein the fluid plastic (52) flows in the axial direction parallel to the longitudinal axis (Z) of the can (22) to be manufactured, into the part of the injection moulding tool which moulds the peripheral wall (30) of the can (22), **characterised in that** an inner mould part (2) of the injection moulding tool is rotated relative to an outer mould part (12) of the injection moulding tool during the introduction and/or after the introduction of the plastic (52).

10. A method according to claim 9, **characterised in that** a bearing (10) or a bearing holder (11) is applied into the injection moulding tool in a defined position before the fluid plastic (52) is introduced into the injection moulding tool.

11. A method according to claim 10, **characterised in that** the bearing (10) or the bearing holder (11) is applied into a recess (8) in the injection moulding tool, in particular on the inner mould part (2) of the injection moulding tool.

12. A method according to claim 11, **characterised in that** the bearing (10) or the bearing holder (11) is applied into a recess (8) on the inner mould part (2) and there, during the introduction of the fluid plastic (52), is held in a manner bearing on at least one surface of the mould part (2) by way of the pressure of the plastic (52).

13. A method according to one of the claims 10 to 12, **characterised in that** before the insertion into the injection moulding tool, a structuring, in particular a macro-structuring and/or micro-structuring is formed on at least one surface of the bearing (10) or the bearing holder (11), said surface being envisaged to come into contact with the plastic (52).

14. A method according to claim 13, **characterised in that** the structuring is incorporated into the surface by way of laser beam or electrode beam.

15. A method according to one of the claims 9 to 14, **characterised in that** a premanufactured material ply (38) is applied into the injection moulding tool before the introduction of the fluid plastic (52), wherein the fluid plastic (52) is subsequently introduced preferably between an inner mould part (2) of the injection moulding tool and the premanufactured material ply (38).

16. A method according to claim 15, **characterised in that** the premanufactured material ply (38) is elastically stretchable and is stretched on introduction of the plastic (52)

17. A method according to one of the claims 9 to 16, **characterised in that** at least one part of the injection moulding tool is heated.

18. A method according to one of the claims 9 to 17, **characterised in that** the injection moulding tool comprises a gap (18), which is designed for forming a radially extending collar (20) at the open end of the can (22) to be manufactured, wherein during solidification of the plastic (52), a pressure is exerted onto at least one of the walls of the injection moulding tool which define the gap (18), said pressure being directed towards the opposite wall.

## Revendications

1. Gaine d'un moteur d'entraînement pour un groupe motopompe, la gaine (22) étant réalisée au moins partiellement en matière plastique (52),
dans laquelle
la matière plastique (52) est renforcée, au moins dans une partie de la gaine (22), par des fibres (32) individuelles réparties dans la matière plastique (52), **caractérisée par** trois couches (34, 35, 36) superposées en direction radiale et adjacentes l'une à l'autre, les fibres (32) dans une couche médiane (35) étant orientées dans une direction circonférentielle par rapport à l'axe longitudinal (Z) de la gaine (32), et les fibres (32) dans des couches extérieures adjacentes (34, 36) étant orientées dans une direction axiale par rapport à l'axe longitudinal (Z) de la gaine (32), et les couches extérieures (34, 36) formant des couches superficielles de plus faible épaisseur que la couche médiane.

2. Gaine selon la revendication 1, **caractérisée en ce que** la gaine (22) est conçue ouverte à une extrémité axiale (29) et présente un collet (20) orienté radialement vers l'extérieur, les fibres (32) dans le collet (20) étant orientées, dans au moins une couche de la matière plastique (52), radialement par rapport à l'axe longitudinal (Z) de la gaine (22).

3. Gaine selon l'une des revendications précédentes, **caractérisée en ce que** la gaine (22) présente une couche extérieure (38) en matériau précontraint et une couche intérieure (54) réalisée en matière plastique (52) renforcée par des fibres (32) individuelles réparties dans la matière plastique, les fibres (32) dans au moins une couche (35) de la couche intérieure (54) étant orientées de manière définie dans une direction circonférentielle par rapport à l'axe longitudinal (Z) de la gaine (22).

4. Gaine selon l'une des revendications précédentes, **caractérisée en ce que** dans la matière plastique (52) de la gaine (22) est noyé un palier (10) prévu pour le logement d'un rotor, ou un porte-palier (11) prévu pour recevoir un palier (10) pour le logement d'un rotor.

5. Gaine selon la revendication 4, **caractérisée en ce que** le palier (10) ou le porte-palier (11) est réalisé dans un matériau qui présente une dureté et/ou rigidité plus élevée que la matière plastique (52) de la gaine (22), et en particulier est réalisé en métal.

6. Gaine selon la revendication 4 ou 5, **caractérisée en ce qu'**au moins une surface du palier (10) ou du porte-palier (11), qui est en contact avec la matière plastique (52) de la gaine (22), est pourvue d'une structuration de surface, en particulier une macro- ou micro-structuration.

7. Gaine selon la revendication 6, **caractérisée en ce que** des protubérances, cavités et/ou trous sont ménagés dans la au moins une surface.

8. Gaine selon l'une des revendications 4 à 7, **caractérisée en ce que** sont formés dans le palier (10) ou le porte-palier (11) des rainures (60) ou canaux qui s'étendent parallèlement à l'axe longitudinal (Z) de la gaine (22) sur la longueur axiale du palier (10) ou du porte-palier (11).

9. Procédé de fabrication d'une gaine d'un moteur d'entraînement pour un groupe motopompe, dans lequel une matière plastique (52) liquide à laquelle sont mélangées des fibres individuelles (32) en tant que renfort, est introduite dans un outil de moulage par injection, qui définit la forme de la gaine (22) à fabriquer, la matière plastique (52) liquide pénétrant dans la partie de l'outil de moulage par injection qui forme la paroi circonférentielle (30) de la gaine (22), dans une direction axiale parallèle à l'axe longitudinal (Z) de la gaine (22) à fabriquer, **caractérisé en ce que**, pendant l'introduction et/ou après l'introduction de la matière plastique (52), une partie de moule intérieure (2) de l'outil de moulage par injection est amenée en rotation par rapport à une partie de moule extérieure (12) de l'outil de moulage par injection.

10. Procédé selon la revendication 9, **caractérisé en ce qu'**avant l'introduction de la matière plastique (52) liquide dans l'outil de moulage par injection, un palier (10) ou un porte-palier (11) est inséré dans l'outil de moulage par injection dans une position définie.

11. Procédé selon la revendication 10, **caractérisé en ce que** le palier (10) ou le porte-palier (11) est inséré dans un évidement (8) ménagé dans l'outil de moulage par injection, en particulier au niveau de la partie de moule intérieure (2) de l'outil de moulage par injection.

12. Procédé selon la revendication 11, **caractérisé en ce que** le palier (10) ou le porte-palier (11) est inséré dans un évidement (8) au niveau de la partie de moule intérieure (2) et, pendant l'introduction de la matière plastique (52) liquide, y est maintenu en appui contre au moins une surface de la partie de moule (2) par la pression de la matière plastique (52).

13. Procédé selon l'une des revendications 10 à 12, **caractérisé en ce qu'**avant l'insertion dans l'outil de moulage par injection, une structuration, en particulier une micro- et/ou macro-structuration, est formée sur au moins une surface du palier (10) ou du porte-palier (11), laquelle est prévue pour venir en contact avec la matière plastique (52).

14. Procédé selon la revendication 13, **caractérisé en ce que** la structuration est introduite dans la surface au moyen d'un faisceau laser ou un faisceau d'électrons.

15. Procédé selon l'une des revendications 9 à 14, **caractérisée en ce qu'**avant l'introduction de la matière plastique (52) liquide, une couche de matériau (38) préfabriquée est insérée dans l'outil de moulage par injection, la matière plastique (52) liquide étant ensuite introduite, de préférence, entre une partie de moule intérieure (2) de l'outil de moulage par injection et la couche de matériau (38) préfabriquée.

16. Procédé selon la revendication 15, **caractérisé en ce que** la couche de matériau (38) préfabriquée est extensible élastiquement et dilatée lors de l'introduction de la matière plastique (52).

17. Procédé selon l'une des revendications 9 à 16, **caractérisé en ce qu'**au moins une partie de l'outil de moulage par injection est chauffée.

18. Procédé selon l'une des revendications 9 à 17, **caractérisé en ce que** l'outil de moulage par injection présente une fente (18) qui est conçue pour former un collet (20) s'étendant radialement au niveau de l'extrémité ouverte de la gaine (22) à fabriquer, une pression étant appliquée, pendant la solidification de la matière plastique (52), sur au moins l'une des parois de l'outil de moulage par injection définissant la fente (18), pression qui est dirigée vers la paroi opposée.
